# EUROPÄISCHE PATENTSCHRIFT

(11) **EP 2 483 149 B1**
(45) Veröffentlichungstag und Bekanntmachung des Hinweises auf die Patenterteilung: **28.06.2017**
(21) Anmeldenummer: 10754422.3
(22) Anmeldetag: 31.08.2010
(51) Int. Cl.: B64D 11/00

(54) **KABINENAUSSTATTUNGSKOMPONENTENANSCHLUSSSYSTEM UND VERFAHREN ZUR MODIFIKATION EINER PASSAGIERKABINENKONFIGURATION**
CABIN EQUIPMENT COMPONENT CONNECTION SYSTEM AND METHOD FOR MODIFYING PASSENGER CABIN CONFIGURATION
SYSTÈME DE RACCORDEMENT D'ÉLÉMENTS D'ÉQUIPEMENT DE CABINE ET PROCÉDÉ POUR MODIFIER LA CONFIGURATION D'UNE CABINE PASSAGERS

(30) Priorität: 28.09.2009 DE 102009043314; 28.09.2009 US 246172 P
(43) Veröffentlichungstag der Anmeldung: 08.08.2012
(73) Patentinhaber: Airbus Operations GmbH, 21129 Hamburg (DE)
(72) Erfinder: SIEBEN, Martin, 20146 Hamburg (DE)
(74) Vertreter: Schicker, Silvia
(86) Internationale Anmeldenummer: PCT/EP2010/005352
(87) Internationale Veröffentlichungsnummer: WO 2011/035845

(56) Entgegenhaltungen:
- EP-A1- 1 803 645
- EP-B1- 2 411 272
- WO-A2-2010/108775
- DE-A1-102005 007 058
- US-A- 5 083 727

## Beschreibung

Die Erfindung betrifft ein Kabinenausstattungskomponentenanschlusssystem für ein Flugzeug. Ferner betrifft die Erfindung ein Verfahren zur Modifikation einer Passagierkabinenkonfiguration, bei dem ein derartiges Kabinenausstattungskomponentenanschlusssystem zum Einsatz kommt.

Im Betrieb moderner Verkehrsflugzeuge gewinnen Bestrebungen, die Flugzeuge möglichst optimal auszulasten, immer mehr an Bedeutung. Eine Optimierung der Flugzeugauslastung ist häufig jedoch nur dann möglich, wenn die Flugzeugpassagierkabine zumindest in gewissem Umfang flexibel umrüstbar ist. In diesem Zusammenhang beschreiben beispielsweise die DE 10 2005 007 058 A1 und die DE 10 2005 054 890 A1 ein System von Leitungsanschlüssen bzw. ein Befestigungssystem, die es ermöglichen, in einer Flugzeugpassagierkabine vorgesehene Einbauten, wie z.B. Bordküchen oder Toiletten an unterschiedlichen Positionen in der Flugzeugpassagierkabine anzuordnen.

Für eine Fluggesellschaft kann es ökonomisch sinnvoll sein, ein Verkehrsflugzeug zu bestimmten Zeiten, z.B. während der Urlaubszeit, mit einer höheren Anzahl Economy Class Sitzen und zu anderen Zeiten, z.B. außerhalb der Urlaubszeit, mit einer höheren Anzahl Business Class Sitzen zu betreiben. Ferner kann es für eine Fluggesellschaft wünschenswert sein, die Gesamtzahl von Sitzen in der Flugzeugpassagierkabine, beispielsweise auslastungsabhängig oder flugstreckenabhängig, zu variieren. Eine Optimierung der Flugzeugauslastung erfordert daher nicht nur eine möglichst flexible Positionierung von in einer Flugzeugpassagierkabine vorgesehenen Monumenten in der Flugzeugpassagierkabine, sondern auch eine möglichst flexible Aufteilung der Flugzeugpassagierkabine in einen Business Class Bereich und einen Economy Class Bereich sowie eine möglichst flexible Anpassung der Abstände zwischen hintereinander in der Flugzeugpassagierkabine angeordneten Sitzreihen.

Derzeit werden Verkehrsflugzeuge herstellerseitig mit einer festgelegten Passagierkabinenkonfiguration, d.h. mit einer festgelegten Aufteilung der Flugzeugpassagierkabine in einen Business Class Bereich und einen Economy Class Bereich und mit einer festgelegten Anzahl von Sitzreihen ausgeliefert. Die Anordnung von Kabinenelementen, wie z.B. Trennwänden oder Monumenten, aber auch das Layout von Kabinenausstattungskomponenten, wie z.B. Verkabelungen, Individualluftzuführungen, Personal Service Einheiten, Anzeigeelementen, Sauerstoffversorgungssystemen, Beleuchtungselementen oder Unterhaltungselektronikkomponenten ist an diese festgelegte Passagierkabinenkonfiguration angepasst. Für die festgelegte Passagierkabinenkonfiguration stellt der Hersteller eine Dokumentation bereit. Ferner ist die herstellerseitige Passagierkabinenkonfiguration Gegenstand eines Zertifikats.

Eine Umrüstung der herstellerseitig festgelegten Passagierkabinenkonfiguration erfordert daher nicht nur eine Umstrukturierung der Sitzanordnung in der Passagierkabine. Vielmehr ist auch eine Anpassung der Anordnung von Kabinenelementen sowie eine Anpassung des Kabinenausstattungskomponentenlayouts an die veränderte Passagierkabinenkonfiguration erforderlich. Beispielsweise zieht eine Veränderung der Abstände zwischen hintereinander angeordneten Sitzreihen zwangsläufig eine Anpassung der Anordnung von den Sitzreihen zugeordneten Kabinenausstattungskomponenten, wie z.B. Kabeln, Individualluftzuführungen, Personal Service Einheiten, Anzeigeelementen, Sauerstoffversorgungssystemen, Beleuchtungselementen, Unterhaltungselektronikkomponenten, etc. nach sich.

Insbesondere sicherheitsrelevante Layoutmodifikationen müssen vor der Wiederinbetriebnahme des Flugzeugs nach der Kabinenrekonfiguration aufwändigen Tests unterzogen werden. Schließlich ist, je nach Umfang der durchgeführten Rekonfigurationsmaßnahmen, eine behördliche, zumindest aber eine herstellerseitige Zertifizierung der modifizierten Passagierkabinenkonfiguration nötig. Die Umrüstung einer herstellseitig festgelegten Passagierkabinenkonfiguration eines Verkehrsflugzeugs ist folglich sehr zeitaufwändig und kostenintensiv. Eine flexible Gestaltung der Flugzeugpassagierkabine erfordernde Maßnahmen zur Optimierung der Flugzeugauslastung sind daher derzeit häufig nicht oder nur sehr eingeschränkt realisierbar.

Die EP 1 803 645 A1 offenbart ein Kabinenausstattungskomponentenanschlusssystem und ein Verfahren zur Modifikation einer Passagierkabinenkonfiguration für ein Flugzeug gemäß dem Oberbegriff der Ansprüche 1 bzw. 7. Sie offenbart ein Modul für ein Flugzeug. Das Modul umfasst ein Rahmenelement, in dem ein Funktionselement angeordnet ist. Das Funktionselement kann zum Beispiel eine Sitzreihe oder ein Staufach sein. Das Rahmenelement ist dazu eingerichtet, an einer Bodenplatte sowie an einem Rumpfelement des Flugzeugs befestigt zu werden. Da die Funktionselemente an dem Rahmenelement befestigt sind, können die Sitzreihen sowie die dazu gehörigen Elemente einfacher verschoben werden.

Die EP 2 411 272 B1 hat die Integration von Versorgungsfunktionen in einem Staufach zum Gegenstand. Insbesondere wird ein integriertes Modul offenbart, das in einer Passagierkabine eines Flugzeugs im Überkopfbereich angebracht werden kann und das eine Vielzahl von unterschiedlichen Systemkomponenten aufweist, die bei der mechanischen Installation des Moduls an der tragenden Struktur der Kabine automatisch an die Versorgung des Flugzeugs über universelle Standardschnittstellen angeschlossen werden.

Der vorliegenden Erfindung liegt die Aufgabe zugrunde, ein Kabinenausstattungskomponentenanschlusssystem für ein Flugzeug bereitzustellen, das eine einfache und zeitsparende Modifikation einer Passagierkabinenkonfiguration ermöglicht. Ferner liegt der Erfindung die Aufgabe zugrunde, ein Verfahren zur Modifikation einer Passagierkabinenkonfiguration anzugeben, bei dem ein derartiges Kabinenausstattungskomponentenanschlusssystem zum Einsatz kommt.

Diese Aufgabe wird durch ein Kabinenausstattungskomponentenanschlusssystem für ein Flugzeug mit den Merkmalen des Anspruchs 1 sowie ein Verfahren zur Modifikation einer Passagierkabinenkonfiguration mit den Merkmalen des Anspruchs 7 gelöst.
Das erfindungsgemäße Kabinenausstattungskomponentenanschlusssystem umfasst eine Mehrzahl von Anschlusselementen, die jeweils dazu eingerichtet sind, mit einer Kabinenausstattungskomponente verbunden zu werden, um die Kabinenausstattungskomponente an ein übergeordnetes System des Flugzeugs anzuschließen. Eine Kabinenausstattungskomponente, die mittels eines Anschlusselements des erfindungsgemäßen Kabinenausstattungskomponentenanschlusssystems an ein übergeordnetes System des Flugzeugs anschließbar ist, kann ein Kabinenelement, wie z.B. eine Trennwand oder ein Monument, wie z.B. eine Flugzeugbordküche, eine Toilette oder dergleichen sein. Alternativ dazu kann die Kabinenausstattungskomponente jedoch auch ein Teil der Flugzeugverkabelung, ein Teil der Flugzeugklimaanlage, wie z.B. eine Individualluftzuführung, eine Personal Service Einheit, ein Anzeigeelement, ein Teil eines Notfall-Sauerstoffversorgungssystems, ein Beleuchtungselement, eine Unterhaltungselektronikkomponente oder dergleichen sein.
Das übergeordnete Flugzeugsystem kann ein Kabelsystem, wie z.B. ein zentrales oder dezentrales Kabelsystem des Flugzeugs sein, das der Versorgung der Kabinenausstattungskomponente mit elektrischer Energie und/oder der Signalübertragung dient. Alternativ dazu kann das System ein Klimatisierungssystem, ein wasserführendes System oder ein beliebiges anderes Versorgungssystem des Flugzeugs sein. Die Ausgestaltung des Anschlusselements ist an die Ausgestaltung der Kabinenausstattungskomponente sowie die Ausgestaltung des übergeordneten Flugzeugsystems angepasst. Das Anschlusselement kann demnach ein elektrisches oder elektronisches Anschlusselement oder ein zur Verbindung luft- oder wasserführender Leitungen geeignetes Anschlusselement sein.
Die Anzahl und/oder die Anordnung der Kabinenausstattungskomponenten in der Flugzeugpassagierkabine ist an die übergeordnete Konfiguration der Flugzeugpassagierkabine angepasst. Mit anderen Worten, bei einer Belegung der Kabine des Flugzeugs mit einer vorbestimmten Anzahl von Passagieren oder mit Reihen von Sitzen, die in einem vorbestimmten Abstand voneinander angeordnet sind, ist eine an die vorbestimmte Passagieranzahl oder den vorbestimmten Sitzreihenabstand angepasste Anzahl von Kabinenausstattungskomponenten an an die vorbestimmte Passagieranzahl oder den vorbestimmten Sitzreihenabstand angepassten Positionen in der Flugzeugpassagierkabine vorgesehen. Beispielsweise kann die Anzahl und die Position von in der Flugzeugpassagierkabine vorgesehenen Trennwänden oder Monumenten in Abhängigkeit der vorbestimmten Passagieranzahl oder des vorbestimmten Sitzreihenabstands variiert werden. In ähnlicher Weise kann die Anzahl und die Anordnung von Kabinenausstattungskomponenten, wie z.B. Verkabelungen, Luftzuführungselementen, Personal Service Einheiten, Anzeigeelementen, Komponenten des Notfall-Sauerstoffversorgungssystems, Beleuchtungselementen oder Unterhaltungselektronikkomponenten an die vorbestimmte Passagieranzahl oder den vorbestimmten Sitzreihenabstand in der Flugzeugpassagierkabine angepasst werden.

Das erfindungsgemäße Kabinenausstattungskomponentenanschlusssystem kann in mehrere Zonen unterteilt sein, die jeweils vorbestimmten Bereichen der Flugzeugpassagierkabine zugeordnet sein können. Alternativ dazu kann das Kabinenausstattungskomponentenanschlusssystem jedoch auch nur eine einem Bereich der Flugzeugpassagierkabine oder der gesamten Flugzeugpassagierkabine zugeordnete Zone umfassen.

In zumindest einer Zone des Kabinenausstattungskomponentenanschlusssystems ist eine Anzahl und eine Anordnung der Anschlusselemente in der Kabine des Flugzeugs so gewählt, dass bei einer Belegung der Kabine des Flugzeugs mit einer vorbestimmten ersten Anzahl von Passagieren oder mit Reihen von Sitzen, die in einem vorbestimmten ersten Abstand voneinander angeordnet sind, in einer an die vorbestimmte erste Passagieranzahl oder den vorbestimmten ersten Sitzreihenabstand angepassten ersten Anzahl und/oder ersten Anordnung in der Kabine des Flugzeugs vorgesehene Kabinenausstattungskomponenten mit den Anschlusselementen des Kabinenausstattungskomponentenanschlusssystems verbindbar sind. Ferner ist die Anzahl und die Anordnung der Anschlusselemente in der Kabine des Flugzeugs in der zumindest eine Zone des Kabinenausstattungskomponentenanschlusssystems so gewählt, dass bei einer Belegung der Kabine des Flugzeugs mit einer vorbestimmten zweiten Anzahl von Passagieren oder mit Reihen von Sitzen, die in einem vorbestimmten zweiten Abstand voneinander angeordnet sind, in einer an die vorbestimmte zweite Passagieranzahl oder den vorbestimmten zweiten Sitzreihenabstand angepassten zweiten Anzahl und/oder zweiten Anordnung in der Kabine des Flugzeugs vorgesehene Kabinenausstattungskomponenten mit den Anschlusselementen des Kabinenausstattungskomponentenanschlusssystems verbindbar sind, ohne dass hierzu eine Modifikation der Anzahl und der Anordnung der Anschlusselemente in der Kabine des Flugzeugs erforderlich ist.

Mit anderen Worten, das erfindungsgemäße Kabinenausstattungskomponentenanschlusssystem ist so gestaltet, d.h. die Anzahl und die Anordnung der Anschlusselemente des Kabinenausstattungskomponentenanschlusssystems in der Flugzeugpassagierkabine ist so gewählt, dass in mindestens zwei verschiedenen Kabinenkonfigurationen, die durch eine vorbestimmte Passagieranzahl oder einen vorbestimmten Sitzreihenabstand in der Flugzeugpassagierkabine definiert sind, alle in diesen Kabinenkonfigurationen vorgesehenen Kabinenausstattungskomponenten mit entsprechenden Anschlusselementen des Kabinenausstattungskomponentenanschlusssystems verbunden werden können, ohne dass hierzu eine Umrüstung des Kabinenausstattungskomponentenanschlusssystems erforderlich ist.

Mit Hilfe des erfindungsgemäßen Kabinenausstattungskomponentenanschlusssystems ist die Flugzeugpassagierkabine somit auf besonders einfache und zeitsparende Art und Weise zwischen mindestens zwei Konfigurationen umrüstbar. Umrüst- und Stillstandzeiten des Flugzeugs können dadurch von einigen Tagen auf einige Stunden verkürzt werden. Da ferner bei einer Rekonfiguration der Flugzeugpassagierkabine unter Verwendung des erfindungsgemäßen Kabinenausstattungskomponentenanschlusssystems auf die Installation zusätzlicher Anschlusselemente in der Flugzeugpassagierkabine verzichtet werden kann, wird das Fehlerrisiko bei der Kabinenrekonfiguration gesenkt, so dass die für die Kabinenrekonfiguration erforderlichen Stillstandszeiten des Flugzeugs mit größerer Zuverlässigkeit vorhergesagt werden können. Darüber hinaus können durch den Verzicht auf die Installation zusätzlicher Anschlusselemente bei der Kabinenrekonfiguration die vor der Wiederinbetriebnahme des Flugzeugs nach der Kabinenrekonfiguration erforderlichen Tests beträchtlich vereinfacht werden. Schließlich kann darauf verzichtet werden, zur Installation bei einer Kabinenrekonfiguration vorgesehene zusätzliche Anschlusselemente auf Lager zu halten.

Wie bereits erwähnt, kann eine Kabinenrekonfiguration lediglich eine Umpositionierung von Kabinenausstattungskomponenten in der Flugzeugpassagierkabine beinhalten. In einem derartigen Fall müssen die Anschlusselemente des Kabinenausstattungskomponentenanschlusssystems so in der Flugzeugpassagierkabine positioniert sein, dass sie eine ordnungsgemäße Verbindung der an verschiedenen Positionen in der Flugzeugpassagierkabine angeordneten Kabinenausstattungskomponenten mit dem übergeordneten Flugzeugsystem ermöglichen. Beispielsweise kann das Kabinenausstattungskomponentenanschlusssystem ein erstes Anschlusselement, das in einer ersten Kabinenkonfiguration mit einer in einer ersten Position in der Kabine angeordneten Kabinenausstattungskomponente verbunden ist, und ein zweites Anschlusselement umfassen, das in einer zweiten Kabinenkonfiguration mit der in der zweiten Kabinenkonfiguration in einer zweiten Position in der Kabine angeordneten Kabinenausstattungskomponente verbunden ist.

Alternativ oder zusätzlich dazu kann eine Kabinenrekonfiguration jedoch auch eine Veränderung der Anzahl der mittels der Anschlusselemente des Kabinenausstattungskomponentenanschlusssystems an ein übergeordnetes Flugzeugsystem anzuschließenden Kabinenausstattungskomponenten nach sich ziehen. In einem derartigen Fall muss das Kabinenausstattungskomponentenanschlusssystem mit einer Anzahl von Anschlusselementen versehen sein, die an die höhere Anzahl von in zwei verschiedenen Kabinenkonfigurationen an ein übergeordnetes Flugzeugsystem anzuschließenden Kabinenausstattungskomponenten angepasst ist. Grundsätzlich kann die Ausstattung des erfindungsgemäßen Kabinenausstattungskomponentenanschlusssystems mit einer geeigneten Anzahl von Anschlusselementen, die an geeigneten Positionen in der Flugzeugpassagierkabine angeordnet sind, im Vergleich zu konventionellen Kabinenausstattungskomponentenanschlusssystemen ein gewisses Mehrgewicht des Systems nach sich ziehen. Aus diesem Mehrgewicht resultierende insbesondere ökonomische Nachteile werden jedoch durch die ökonomischen Vorteile des erfindungsgemäßen Systems kompensiert.

Vorzugsweise ist in zumindest einer Zone des erfindungsgemäßen Kabinenausstattungskomponentenanschlusssystems, die einem vorbestimmten Bereich einer Kabine des Flugzeugs zugeordnet ist, eine Anzahl und eine Anordnung der Anschlusselemente in der Kabine des Flugzeugs so gewählt, dass bei einer Belegung der Kabine des Flugzeugs mit einer vorbestimmten maximalen Anzahl von Passagieren oder mit Reihen von Sitzen, die in einem vorbestimmten minimalen Abstand voneinander angeordnet sind, in einer entsprechenden, d.h. einer an die vorbestimmte maximale Passagieranzahl oder den vorbestimmten minimalen Sitzreihenabstand angepassten Anzahl oder einer entsprechenden, d.h. einer an die vorbestimmte maximale Passagieranzahl oder den vorbestimmten minimalen Sitzreihenabstand angepassten Anordnung in der Kabine des Flugzeugs vorgesehene Kabinenausstattungskomponenten mit den Anschlusselementen des Kabinenausstattungskomponentenanschlusssystems verbindbar sind, ohne dass hierzu eine Modifikation der Anzahl und der Anordnung der Anschlusselemente in der Kabine des Flugzeugs erforderlich ist.

Mit anderen Worten, vorzugsweise stehen bei dem erfindungsgemäßen Kabinenausstattungskomponentenanschlusssystem so viele Anschlusselemente in einer entsprechenden Anordnung in der Flugzeugpassagierkabine zur Verfügung, das eine für eine vorbestimmte maximale Passagieranzahl oder einen vorbestimmten minimalen Sitzreihenabstand vorgesehene Anzahl und Anordnung von Kabinenausstattungskomponenten mittels der Anschlusselemente an entsprechende übergeordnete Flugzeugsysteme angeschlossen werden kann. Das Kabinenausstattungskomponentenanschlusssystem ist dann auf eine maximale Auslastung der Flugzeugpassagierkabine ausgelegt.

Bei einer besonders bevorzugten Ausführungsform des erfindungsgemäßen Kabinenausstattungskomponentenanschlusssystems ist in zumindest einer Zone des Kabinenausstattungskomponentenanschlusssystems, die einem vorbestimmten Bereich einer Kabine des Flugzeugs zugeordnet ist, eine Anzahl und eine Anordnung der Anschlusselemente in der Kabine des Flugzeugs so gewählt, dass bei einer Belegung der Kabine des Flugzeugs mit jeder vorbestimmten Anzahl von Passagieren oder mit Reihen von Sitzen, die in jedem vorbestimmten Abstand voneinander angeordnet sind, in einer entsprechenden Anzahl und/oder einen entsprechenden Anordnung in der Kabine des Flugzeugs vorgesehene Kabinenausstattungskomponenten mit den Anschlusselementen des Kabinenausstattungskomponentenanschlusssystems verbindbar sind, ohne dass hierzu eine Modifikation der Anzahl und der Anordnung der Anschlusselemente in der Kabine des Flugzeugs erforderlich ist. Unter "jeder vorbestimmten Anzahl von Passagieren" wird hier jede, beispielsweise herstellerseitig definierte Anzahl von Passagieren verstanden, der eine entsprechende Anzahl und/oder eine entsprechende Anordnung von Kabinenausstattungskomponenten in der Flugzeugpassagierkabine zugeordnet ist. In ähnlicher Weise wird hier unter "jedem vorbestimmten Sitzreihenabstand" jeder, beispielsweise herstellerseitig definierte Sitzreihenabstand verstanden, dem eine entsprechende Anzahl und/oder eine entsprechende Anordnung von Kabinenausstattungskomponenten in der Flugzeugpassagierkabine zugeordnet ist.

Beispielsweise kann seitens des Flugzeugherstellers jeder beliebigen Passagieranzahl bis zur maximal zulässigen Passagieranzahl oder jedem beliebigen Sitzreihenabstand bis zum minimal zugelassenen Sitzreihenabstand eine entsprechende Anzahl und/oder Anordnung von Kabinenausstattungskomponenten in der Flugzeugpassagierkabine zugeordnet werden. In Abhängigkeit dieser Zuordnung kann dann das erfindungsgemäße Kabinenausstattungskomponentenanschlusssystem so gestaltet werden, dass für alle vordefinierten Anzahlen und/oder Anordnungen von Kabinenausstattungskomponenten in der Flugzeugpassagierkabine entsprechende Anschlusselemente zum Verbinden der Kabinenausstattungskomponenten mit entsprechenden übergeordneten Flugzeugsystemen bereitstehen. Ein derart gestaltetes Kabinenausstattungskomponentenanschlusssystem ermöglicht eine besonders flexible Rekonfiguration der Flugzeugpassagierkabine. Ferner kann der Aufwand zur Anpassung der Dokumentation der Rekonfiguration sowie eine gegebenenfalls erforderliche Zertifizierung der Rekonfiguration minimiert werden.
Im Betrieb eines Flugzeugs besteht das Problem, dass verschiedene Flugzeugsysteme, wie z.B. Überwachungssysteme, aber auch Steuersysteme, wie z.B. das Flugsteuersystem zur Vermeidung von Fehlermeldungen oder zu Steuerungszwecken Informationen über den Konfigurationszustand der Flugzeugkabine und damit über den Konfigurationszustand des erfindungsgemäßen Kabinenausstattungskomponentenanschlusssystems erhalten sollten. Das erfindungsgemäße Kabinenausstattungskomponentenanschlusssystem umfasst daher ein Steuersystem, das dazu eingerichtet ist, für einen Konfigurationszustand des Kabinenausstattungskomponentenanschlusssystems charakteristische Daten bereitzustellen. Das Steuersystem kann in Form von Hardware oder Software implementiert sein. Ferner kann das Steuersystem dazu eingerichtet sein, die für den Konfigurationszustand des Kabinenausstattungskomponentenanschlusssystems charakteristische Daten einem weiteren Überwachungs- oder Steuersystem des Flugzeugs zur weiteren Verarbeitung zu übermitteln.

Beispielsweise ist das Steuersystem dazu eingerichtet, Daten bereitzustellen, die in Abhängigkeit des Konfigurationszustands des Kabinenausstattungskomponentenanschlusssystems anzeigen, ob ein Anschlusselement des Kabinenausstattungskomponentenanschlusssystems mit einer Kabinenausstattungskomponente verbunden ist oder nicht. Das Steuersystem stellt Daten über den Verbindungsstatus aller Anschlusselemente des Kabinenausstattungskomponentenanschlusssystems bereit. Die von dem Steuersystem bereitgestellten Daten können in einem weiteren Überwachungs- oder Steuersystem des Flugzeugs weiterverarbeitet werden.
Beispielsweise können die Daten einem Centralized Maintenance System zur Verfügung gestellt werden, das zur Überwachung einer ordnungsgemäßen Funktion der Kabinenausstattungskomponenten regelmäßig überprüft, ob alle Anschlusselemente des Kabinenausstattungskomponentenanschlusssystems mit entsprechenden Kabinenausstattungskomponenten verbunden sind. Anhand der von dem Steuersystem des Kabinenausstattungskomponentenanschlusssystems bereitgestellten Daten kann das Centralized Maintenance System die Anschlusselemente des Kabinenausstattungskomponentenanschlusssystems identifizieren und überprüfen, die in einem bestimmten Konfigurationszustand des Kabinenausstattungskomponentenanschlusssystems mit einer Kabinenausstattungskomponente verbunden sind. Nicht mit einer Kabinenausstattungskomponente verbundene Anschlusselemente können dagegen von der Überprüfung ausgenommen werden, um ungerechtfertigte Fehlermeldungen des Centralized Maintenance Systems zu vermeiden.

Bei einer Rekonfiguration der Flugzeugpassagierkabine kann sich, beispielsweise durch die Installation zusätzlicher Kabinenausstattungskomponenten, die Umpositionierung von Kabinenausstattungskomponenten oder die Deinstallation von Kabinenausstattungskomponenten das Gewicht des Flugzeugs verändern und/oder der Schwerpunkt des Flugzeugs verlagern. Dies muss bei der Flugsteuerung, d.h. der Berechnung der relevanten Flugparameter beim Start und bei der Landung sowie bei der Berechnung der relevanten Flugparameter beim Flugbetrieb des Flugzeugs in Reiseflughöhe berücksichtigt werden. Das erfindungsgemäße Kabinenausstattungskomponentenanschlusssystem umfasst daher vorzugsweise ein Steuersystem, das dazu eingerichtet ist, Daten betreffend das Gewicht des Kabinenausstattungskomponentenanschlusssystems und der damit verbundenen Kabinenausstattungskomponenten und/oder den Einfluss des Gewichts und der Anordnung des Kabinenausstattungskomponentenanschlusssystems und der damit verbundenen Kabinenausstattungskomponenten auf den Schwerpunkt des Flugzeugs bereitzustellen.

Das Steuersystem kann als hardware- oder softwareimplementiertes Steuersystem ausgeführt sein. Ferner kann das Steuersystem separat oder integriert mit dem Steuersystem ausgeführt sein, das für den Konfigurationszustand des Kabinenausstattungskomponentenanschlusssystems charakteristische Daten bereitstellt. Die von dem Steuersystem bereitgestellten Daten können an ein weiteres Steuer- oder Überwachungssystem des Flugzeugs übermittelt werden.

Die von dem Steuersystem bereitgestellten Daten betreffend das Gewicht des Kabinenausstattungskomponentenanschlusssystems und der damit verbundenen Kabinenausstattungskomponenten und/oder den Einfluss des Gewichts und der Anordnung des Kabinenausstattungskomponentenanschlusssystems und der damit verbundenen Kabinenausstattungskomponenten auf den Schwerpunkt des Flugzeugs können auf unterschiedliche Art und Weise verarbeitet werden. In einer ersten Variante kann das Steuersystem dazu eingerichtet sein, die Daten betreffend das Gewicht des Kabinenausstattungskomponentenanschlusssystems und der damit verbundenen Kabinenausstattungskomponenten und/oder den Einfluss des Gewichts und der Anordnung der Kabinenausstattungskomponenten auf den Schwerpunkt des Flugzeugs zur Aktualisierung einer Datenbasis zu nutzen, die Parameterdaten betreffend das Gewicht des Kabinenausstattungskomponentenanschlusssystems und der damit verbundenen Kabinenausstattungskomponenten und/oder den Einfluss des Gewichts und der Anordnung des Kabinenausstattungskomponentenanschlusssystems und der damit verbundenen Kabinenausstattungskomponenten auf den Schwerpunkt der Flugzeugs enthält. Mit anderen Worten, die von dem Steuersystem bereitgestellten Daten können dazu genutzt werden, die in der Datenbasis gespeicherten Parameterdaten zu pflegen und zu aktualisieren. Die Datenbasis enthält dann stets aktuelle, "reale" Daten, auf die auch andere Überwachungs- oder Steuersysteme des Flugzeugs, beispielsweise ein Flugsteuersystem zugreifen können. Bei einer Nutzung der von dem Steuersystem des Kabinenausstattungskomponentenanschlusssystems bereitgestellten Daten zur Aktualisierung einer Datenbasis erfolgt vorzugsweise auch eine entsprechende Aktualisierung der technischen Dokumentation.

Zusätzlich oder alternativ dazu kann das Steuersystem des Kabinenausstattungskomponentenanschlusssystems auch dazu eingerichtet sein, die Daten betreffend das Gewicht des Kabinenausstattungskomponentenanschlusssystems und der damit verbundenen Kabinenausstattungskomponenten zur Ermittlung eines Korrekturfaktors zu nutzen, der geeignet ist, eine Differenz zwischen einem realen Gewicht des Kabinenausstattungskomponentenanschlusssystems und der damit verbundenen Kabinenausstattungskomponenten und einem in einer Datenbasis gespeicherten Parameterwert für das Gewicht des Kabinenausstattungskomponentenanschlusssystems und der damit verbundenen Kabinenausstattungskomponenten zu kompensieren. In ähnlicher Weise kann das Steuersystem dazu eingerichtet sein, die Daten betreffend den Einfluss des Gewichts und der Anordnung des Kabinenausstattungskomponentenanschlusssystems und der damit verbundenen Kabinenausstattungskomponenten auf den Schwerpunkt des Flugzeugs zur Ermittlung eines Korrekturfaktors zu nutzen, der geeignet ist, eine Differenz zwischen einem realen Einfluss des Gewichts und der Anordnung des Kabinenausstattungskomponentenanschlusssystems und der damit verbundenen Kabinenausstattungskomponenten auf den Schwerpunkt des Flugzeugs und einem in einer Datenbasis gespeicherten Parameterwert für den Einfluss des Gewichts und der Anordnung des Kabinenausstattungskomponentenanschlusssystems und der damit verbundenen Kabinenausstattungskomponenten auf den Schwerpunkt des Flugzeugs zu kompensieren.
Mit anderen Worten, das Steuersystem des Kabinenausstattungskomponentenanschlusssystems kann ein "virtuelles Gewicht" des Kabinenausstattungskomponentenanschlusssystems und der damit verbundenen Kabinenausstattungskomponenten sowie einen "virtuellen Einfluss" des Gewichts und der Anordnung des Kabinenausstattungskomponentenanschlusssystems und der damit verbundenen Kabinenausstattungskomponenten auf den Schwerpunkt des Flugzeugs ermitteln. Diese Daten können dann, beispielsweise bei der Flugsteuerung, als Korrekturfaktoren für entsprechende in einer Datenbasis gespeicherte Parameterwerte genutzt werden, so dass eine Variation des Gewichts des Kabinenausstattungskomponentenanschlusssystems und der damit verbundenen Kabinenausstattungskomponenten sowie des Einflusses des Gewichts und der Anordnung des Kabinenausstattungskomponentenanschlusssystems und der damit verbundenen Kabinenausstattungskomponenten auf den Schwerpunkt des Flugzeugs bei einer Rekonfiguration der Flugzeugkabine ordnungsgemäß berücksichtigt werden kann, ohne dass eine tatsächliche Aktualisierung der Datenbasis sowie eine entsprechende Aktualisierung der technischen Dokumentation erforderlich ist.
Bei dem erfindungsgemäßen Verfahren zur Modifikation einer Passagierkabinenkonfiguration in einem Flugzeug wird ein oben beschriebenes Kabinenausstattungskomponentenanschlusssystem für ein Flugzeug bereitgestellt. Das erfindungsgemäße Verfahren kann das Lösen mindestens einer Kabinenausstattungskomponente von einem Anschlusselement des Kabinenausstattungskomponentenanschlusssystems umfassen. Alternativ oder zusätzlich dazu kann das erfindungsgemäße Verfahren das Verbinden von mindestens einer Kabinenausstattungskomponente mit einem Anschlusselement des Kabinenausstattungskomponentenanschlusssystems umfassen.

Bei dem erfindungsgemäßen Verfahren zur Modifikation einer Passagierkabinenkonfiguration stellt ein Steuersystem des Kabinenausstattungskomponentenanschlusssystems für einen Konfigurationszustand des Kabinenausstattungskomponentenanschlusssystems charakteristische Daten bereit.

Das Steuersystem stellt Daten bereit, die in Abhängigkeit des Konfigurationszustands des Kabinenausstattungskomponentenanschlusssystems anzeigen, ob ein Anschlusselement des Kabinenausstattungskomponentenanschlusssystems mit einer Kabinenausstattungskomponente verbunden ist.
Ein Steuersystem kann Daten bereitstellen, die für das Gewicht des Kabinenausstattungskomponentenanschlusssystems und der damit verbundenen Kabinenausstattungskomponenten und/oder den Einfluss des Gewichts und der Anordnung des Kabinenausstattungskomponentenanschlusssystems und der damit verbundenen Kabinenausstattungskomponenten auf den Schwerpunkt des Flugzeugs charakteristisch sind.
Das Steuersystem kann die Daten betreffend das Gewicht des Kabinenausstattungskomponentenanschlusssystems und der damit verbundenen Kabinenausstattungskomponenten und/oder den Einfluss des Gewichts und der Anordnung des Kabinenausstattungskomponentenanschlusssystems und der damit verbundenen Kabinenausstattungskomponenten auf den Schwerpunkt des Flugzeugs zur Aktualisierung einer Datenbasis nutzen, die Parameterdaten betreffend das Gewicht des Kabinenausstattungskomponentenanschlusssystems und der damit verbundenen Kabinenausstattungskomponenten und/oder den Einfluss des Gewichts und der Anordnung des Kabinenausstattungskomponentenanschlusssystems und der damit verbundenen Kabinenausstattungskomponenten auf den Schwerpunkt des Flugzeugs enthält.
Alternativ oder zusätzlich dazu kann das Steuersystem die Daten betreffend das Gewicht des Kabinenausstattungskomponentenanschlusssystems und der damit verbundenen Kabinenausstattungskomponenten zur Ermittlung eines Korrekturfaktors nutzen, der geeignet ist, eine Differenz zwischen einem realen Gewicht des Kabinenausstattungskomponentenanschlusssystems und der damit verbundenen Kabinenausstattungskomponenten und einem in der Datenbasis gespeicherten Parameterwert für das Gewicht des Kabinenausstattungskomponentenanschlusssystems und der damit verbundenen Kabinenausstattungskomponenten zu kompensieren. Ferner kann das Steuersystem die Daten betreffend den Einfluss des Gewichts und der Anordnung des Kabinenausstattungskomponentenanschlusssystems und der damit verbundenen Kabinenausstattungskomponenten auf den Schwerpunkt des Flugzeugs zur Ermittlung eines Korrekturfaktors nutzen, der geeignet ist, eine Differenz zwischen einem realen Einfluss des Gewichts und der Anordnung des Kabinenausstattungskomponentenanschlusssystems und der damit verbundenen Kabinenausstattungskomponenten auf den Schwerpunkt des Flugzeugs und einem in einer Datenbasis gespeicherten Parameterwert für den Einfluss des Gewichts und der Anordnung des Kabinenausstattungskomponentenanschlusssystems und der damit verbundenen Kabinenausstattungskomponenten auf den Schwerpunkt des Flugzeugs zu kompensieren.

Bevorzugte Ausführungsformen der Erfindung werden nun anhand der beigefügten schematischen Zeichnungen näher erläutert, von denen
- Figur 1: eine Flugzeugkabine zeigt, die mit einem in drei Zonen unterteilten Kabinenausstattungskomponentenanschlusssystem ausgestattet ist,
- Figur 2: das Verkabelungslayout eines ersten Teils eines Kabinenausstattungskomponentenanschlusssystems bei einer ersten Passagierkabinenkonfiguration zeigt,
- Figur 3: das Verkabelungslayout des in Figur 2 veranschaulichten Teils eines Kabinenausstattungskomponentenanschlusssystems bei einer zweiten Passagierkabinenkonfiguration zeigt,
- Figur 4: das Verkabelungslayout eines weiteren Teils eines Kabinenausstattungskomponentenanschlusssystems bei der ersten Passagierkabinenkonfiguration zeigt, und
- Figur 5: das Verkabelungslayout des in Figur 4 veranschaulichten Teils eines Kabinenausstattungskomponentenanschlusssystems bei einer zweiten Passagierkabinenkonfiguration zeigt.

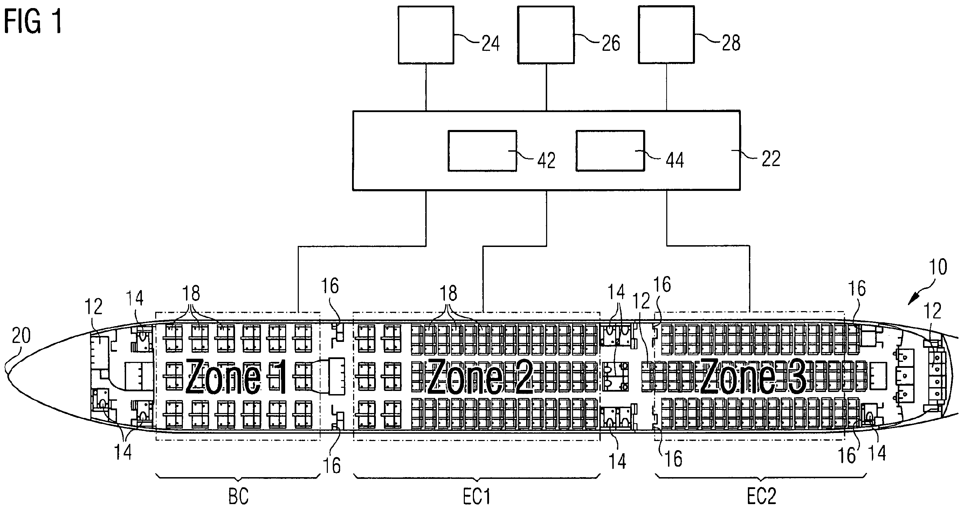

Figur 1 zeigt eine schematischen Ansicht einer Flugzeugpassagierkabine 10. In der Flugzeugpassagierkabine 10 ist eine Mehrzahl von Monumenten, wie z.B. Bordküchen 12, Toiletten 14 und Trennwänden 16 angeordnet. Ferner ist die Flugzeugpassagierkabine 10 mit einer Mehrzahl von Sitzreihen 18 ausgestattet. In einem einer Nase 20 des Flugzeugs zugewandten vorderen Abschnitt der Flugzeugpassagierkabine 10 befindet sich ein Business Class Bereich BC, in dem hintereinander angeordnete Sitzreihen 18 einen größeren Abstand voneinander haben als in zwei in einem heckseitigen Bereich der Flugzeugpassagierkabine 10 vorgesehenen Economy Class Bereichen EC1, EC2.

Die Flugzeugpassagierkabine 10 ist ferner mit einer Vielzahl von Kabinenausstattungskomponenten, wie z.B. Verkabelungen, Luftzuführungen, Personal Service Einheiten, Anzeigeelementen, Sauerstoffversorgungssystemen, Beleuchtungselementen, Unterhaltungselektronikkomponenten, etc. ausgestattet. Die Kabinenausstattungskomponenten sind über ein in Figur 1 lediglich schematisch angedeutetes Kabinenausstattungskomponentenanschlusssystem 22 mit übergeordneten Systemen des Flugzeugs, d.h. beispielsweise einem zentralen oder dezentralen Kabelsystem 24 des Flugzeugs, einem Flugzeugklimatisierungssystem 26 und einem wasserführenden System 28 verbunden. Das Kabinenausstattungskomponentenanschlusssystem 22 dient auch der Anbindung der in der Flugzeugpassagierkabine 10 angeordneten Monumente, d.h. der Bordküchen 12, der Toiletten 14 sowie der Trennwände 16 an die übergeordneten Flugzeugsysteme 24, 26, 28. Das Kabinenausstattungskomponentenanschlusssystem 22 ist in drei verschiedene Zonen, eine der Flugzeugnase 20 zugewandte vordere Zone 1, eine mittlere Zone 2 sowie eine heckseitige Zone 3 unterteilt.

Um eine Optimierung der Flugzeugauslastung zu ermöglichen, ist die Flugzeugpassagierkabine 10 verschieden konfigurierbar. Zu diesem Zweck sind zumindest einige der in der Flugzeugpassagierkabine 10 angeordneten Monumente, insbesondere die Trennwände 16 an verschiedenen Stellen in der Flugzeugpassagierkabine 10 positionierbar. Darüber hinaus ist es möglich, die Anzahl der in der Flugzeugpassagierkabine 10 angeordneten Sitzreihen 18 zu variieren. Eine Erhöhung der Anzahl von Sitzreihen 18 zieht eine Verringerung des Abstands zwischen zwei hintereinander angeordneten Sitzreihen nach sich, während eine Verringerung der Anzahl von Sitzreihen 18 eine Erhöhung des Abstands zwischen zwei hintereinander angeordneten Sitzreihen 18 ermöglicht. Schließlich ist die Aufteilung der Flugzeugpassagierkabine in den Business Class Bereich BC sowie die Economy Class Bereiche EC1, EC2 flexibel, d.h. falls gewünscht, können in einer ersten Konfiguration der Flugzeugpassagierkabine 10 dem Business Class Bereich BC zugeordnete Bereiche der Flugzeugpassagierkabine 10 in einer zweiten Konfiguration der Flugzeugpassagierkabine 10 einem der Economy Class Bereiche EC1, EC2 zugeordnet werden und umgekehrt.

Die Rekonfigurationsoptionen für die Flugzeugpassagierkabine 10 sind an vorbestimmte Bedingungen geknüpft, die entweder behördlich oder herstellerseitig festgelegt sind. Beispielsweise darf eine maximale Passagieranzahl und folglich eine maximale Anzahl von Sitzreihen 18 in der Flugzeugpassagierkabine 10 nicht überschritten oder ein vorgegebener minimaler Abstand zwischen hintereinander angeordneten Sitzreihen 18 nicht unterschritten werden. Die verschiedenen zulässigen Konfigurationsoptionen für die Passagierkabine 10 können somit beispielsweise bereits herstellerseitig vordefiniert werden. Es ist jedoch auch denkbar, eine flexible Konfiguration der Flugzeugpassagierkabine innerhalb beispielsweise herstellerseitig vordefinierter Zulässigkeitsbedingungen zuzulassen.

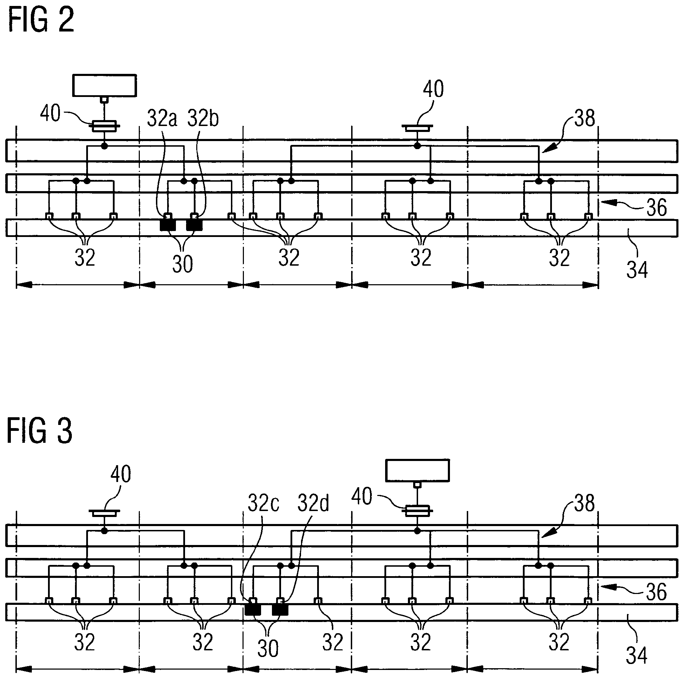

Die Figuren 2 und 3 zeigen einen Teil des Kabinenausstattungskomponentenanschlusssystems 22, der dazu dient, zwei in der Flugzeugpassagierkabine 10 angeordnete Heizvorrichtungen 30 mit dem übergeordneten Kabelsystem 24 des Flugzeugs zu verbinden, um die Heizvorrichtungen 30 mit elektrischer Energie und Steuersignalen zur Steuerung des Betriebs der Heizvorrichtungen 30 zu versorgen. Zu diesem Zweck umfasst der Teil des Kabinenausstattungskomponentenanschlusssystems 22 eine Mehrzahl von Anschlusselementen 32. Die Anschlusselemente 32 sind entlang einer luftführenden Leitung 34 verteilt angeordnet, die sich entlang einer Längsachse der Flugzeugpassagierkabine 10 durch die Flugzeugpassagierkabine 10 erstreckt. Die einzelnen Anschlusselemente 32 sind über entsprechende Verbindungsleitungen 36, 38 mit übergeordneten Anschlussstellen 40 verbunden.

Wie aus einem Vergleich der Figuren 2 und 3 hervorgeht, sind die Heizvorrichtungen 30 in einer ersten Konfiguration der Flugzeugpassagierkabine 10, bei der eine Belegung der Kabine 10 mit einer vorbestimmten ersten Anzahl von Passagieren sowie mit Sitzreihen 18 vorgesehen ist, die in einem vorbestimmten ersten Abstand voneinander angeordnet sind, derart in der Flugzeugpassagierkabine 10, d.h. in der luftführenden Leitung 34 angeordnet, dass sie über Anschlusselemente 32a, 32b mit dem übergeordneten Kabelsystem 24 des Flugzeugs verbunden werden können. In einer zweiten Konfiguration der Flugzeugpassagierkabine 10, bei der eine Belegung der Kabine 10 mit einer vorbestimmten zweiten Anzahl von Passagieren sowie mit Sitzreihen 18 vorgesehen ist, die in einem vorbestimmten zweiten Abstand voneinander angeordnet sind, sind die Heizvorrichtungen 30 dagegen an einer anderen Stelle in der Flugzeugpassagierkabine 10, d.h. an einer anderen Stelle in der luftführenden Leitung 34 angeordnet. Die Heizvorrichtungen 30 können dann über Anschlusselemente 32c, 32d mit dem übergeordneten Kabelsystem 24 des Flugzeugs verbunden werden. Die Anzahl und die Anordnung der Anschlusselemente 32 ist somit so gewählt, dass in jeder Konfiguration der Flugzeugpassagierkabine 10 für die konfigurationsabhängig angeordneten Heizvorrichtungen 30 geeignete Anschlusselemente 32 bereitstehen, ohne dass hierzu eine Nachrüstung des Kabinenausstattungskomponentenanschlusssystem 22 oder eine Modifikation der Verkabelung des Kabinenausstattungskomponentenanschlusssystems 22 erforderlich ist.

In dem in den Figuren 2 und 3 gezeigten Ausführungsbeispiel beeinflusst die Modifikation der Passagierkabinenkonfiguration lediglich die Anordnung.der Heizvorrichtungen 30 in der Flugzeugpassagierkabine 10 bzw. in der luftführenden Leitung 34. Eine Modifikation der Passagierkabinenkonfiguration kann jedoch auch eine Veränderung der Anzahl der Heizvorrichtungen 30 nach sich ziehen. Beispielsweise ist es denkbar, dass eine höhere Anzahl von Heizvorrichtungen 30 erforderlich wird, wenn die Passagieranzahl in der Flugzeugkabine über einen bestimmten Schwellenwert hinaus erhöht und/oder der Abstand zwischen hintereinander angeordneten Sitzreihen 18 über einen bestimmten Schwellenwert hinaus verringert wird. In ähnlicher Weise ist es denkbar, dass die Anzahl der Heizvorrichtungen 30 verringert werden kann, wenn die vorbestimmte Passagieranzahl in der Kabine 10 unter einen gewissen Schwellenwert sinkt und/oder der Abstand zwischen in der Kabine 10 angeordneten Sitzreihen 18 über einen gewissen Schwellenwert steigt. Die Anzahl und die Anordnung der Anschlusselemente 32 ist jedoch so gewählt, dass bei jeder beliebigen, ggf. vordefinierten Konfiguration der Flugzeugpassagierkabine 10, d.h. bei einer Belegung der Kabine 10 mit jeder vorbestimmten Passagieranzahl und/oder Sitzreihen 18, die in jedem vorbestimmten Abstand voneinander angeordnet sind, ausreichend Anschlusselemente 32 zu Verfügung stehen, die auch so angeordnet sind, dass alle benötigten Heizvorrichtungen 30 an das übergeordnete Kabelsystem 24 des Flugzeugs angeschlossen werden können, ohne dass hierfür eine Modifikation der Anzahl und der Anordnung der Anschlusselemente 32 erforderlich ist. Das Kabinenausstattungskomponentenanschlusssystem 22 ist somit auch für eine Belegung der Flugzeugpassagierkabine 10 mit einer vorbestimmten maximalen Anzahl von Passagieren und/oder Sitzreihen 18 ausgelegt, die in einem vorbestimmten minimalen Abstand voneinander angeordnet sind.

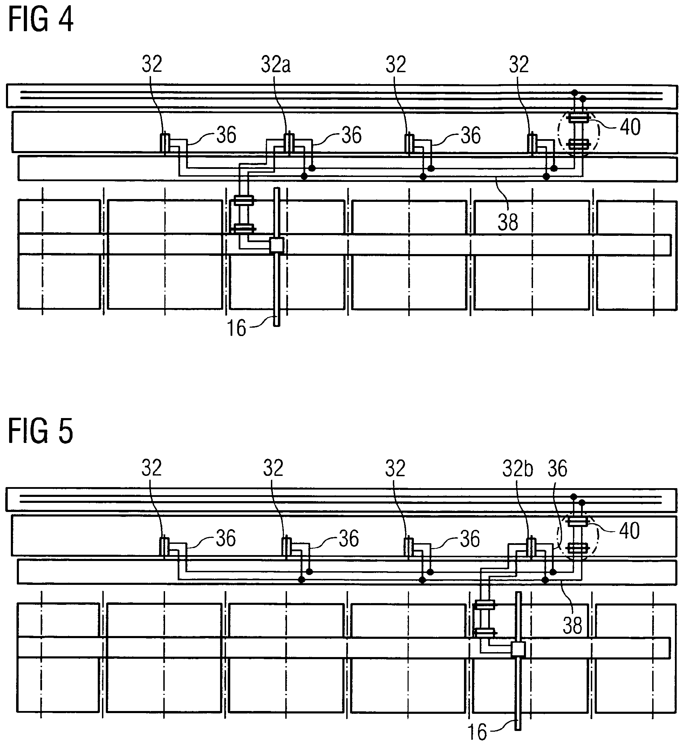

In den Figuren 4 und 5 ist ein Teil eines Kabinenausstattungskomponentenanschlusssystems 22 gezeigt, der dazu dient, eine an verschiedene Positionen in der Flugzeugpassagierkabine 10 befestigbare Trennwand 16 an das übergeordnete Kabelsystem 24 des Flugzeugs anzuschließen. Zu diesem Zweck ist das Kabinenausstattungskomponentenanschlusssystem 22 wiederum mit einer Mehrzahl von Anschlusselementen 32 versehen, die an verschiedenen Positionen in der Flugzeugpassagierkabine 10 angeordnet sind. Die Anordnung der Anschlusselemente 32 in der Kabine 10 ist an die verschiedenen Positionen angepasst, die die Trennwand 16 bei jeder, ggf. vordefinierten Konfiguration der Flugzeugpassagierkabine 10 einnimmt. Mit anderen Worten, die Anordnung der Anschlusselemente 32 in der Kabine 10 ist so gewählt, dass bei einer Belegung der Kabine 10 mit jeder vorbestimmten Passagieranzahl und/oder Sitzreihen 18, die in jedem vorbestimmten Abstand voneinander angeordnet sind, ein Anschlusselement 32 vorhanden ist, das einen Anschluss der entsprechend positionierten Trennwand 16 an das übergeordnete Kabelsystem 24 des Flugzeugs ermöglicht.

Wiederum hat in dem in den Figuren 4 und 5 gezeigten Ausführungsbeispiel eine Rekonfiguration der Flugzeugpassagierkabine 10 lediglich eine Veränderung der Anordnung der Trennwand 16 in der Flugzeugpassagierkabine 10 zur Folge. Es versteht sich jedoch, dass eine Rekonfiguration der Flugzeugpassagierkabine 10 auch die Anordnung zusätzlicher Trennwände 16 oder die Verringerung der Anzahl von in der Flugzeugpassagierkabine 10 vorgesehenen Trennwänden 16 zur Folge haben kann. Das Kabinenausstattungskomponentenanschlusssystem 22 ist jedoch wiederum so ausgelegt, dass in allen denkbaren Konfigurationen der Passagierkabine 10 ein Anschlusselement 32 zum Anschluss der Trennwand/Trennwände 16 an das übergeordnete Kabelsystem 24 des Flugzeugs bereitsteht.

Wie in den Figuren 2 bis 5 zu erkennen ist, kann das Kabinenausstattungskomponentenanschlusssystem 22 in Abhängigkeit des Konfigurationszustands der Flugzeugpassagierkabine 10 Anschlusselemente 32 umfassen, die nicht mit einer entsprechenden Kabinenausstattungskomponente, wie z.B. einer Heizvorrichtung 30 oder einer Trennwand 16 verbunden sind. Da der Verbindungsstatus der Anschlusselemente 32 zur Überwachung einer ordnungsgemäßen Funktion der Kabinenausstattungskomponenten von einem entsprechenden Überwachungssystem des Flugzeugs, beispielsweise dem Centralized Maintenance System regelmäßig überprüft wird, würden nicht mit entsprechenden Kabinenausstattungskomponenten verbundene Anschlusselemente 32 zwangsläufig Fehlermeldungen generieren, wenn das übergeordnete Überwachungssystem des Flugzeugs nicht auf für einen Konfigurationszustand des Kabinenausstattungskomponentenanschlusssystems 22 charakteristische Daten zurückgreifen könnte.

Aus diesem Grund umfasst das Kabinenausstattungskomponentenanschlusssystem 22, wie in Figur 1 schematisch angedeutet ist, ein Steuersystem 42, das für einen Konfigurationszustand des Kabinenausstattungskomponentenanschlusssystems 22 charakteristische Daten bereitstellt. Insbesondere ist das Steuersystem 42 dazu geeignet, Daten bereitzustellen, die in Abhängigkeit des von der Konfiguration der Flugzeugpassagierkabine abhängigen Konfigurationszustands des Kabinenausstattungskomponentenanschlusssystems 22 anzeigen, ob die einzelnen Anschlusselemente 32 des Kabinenausstattungskomponentenanschlusssystems 22 mit einer entsprechenden Kabinenausstattungskomponente verbunden sind oder nicht. Das Steuersystem 42 kann in Form von Hardware oder Software implementiert sein.

Eine Rekonfiguration der Flugzeugpassagierkabine 10 kann ferner zu einer Veränderung des Gewichts des Flugzeugs und/oder einer Verlagerung des Flugzeugschwerpunkts führen. Eine Gewichtsveränderung des Flugzeugs kann sich beispielsweise durch die Installation zusätzlicher Kabinenausstattungskomponenten oder die Deinstallation von Kabinenausstattungskomponenten bei einer Rekonfiguration der Flugzeugpassagierkabine 10 ergeben. Schwerpunktsverlagerungen treten bereits dann auf, wenn die Rekonfiguration der Flugzeugpassagierkabine 10 mit einer Umpositionierung von Kabinenausstattungskomponenten verbunden ist. Das Kabinenausstattungskomponentenanschlusssystem umfasst daher ein weiteres Steuersystem 44, das Daten betreffend das Gewicht des Kabinenausstattungskomponentenanschlusssystems 22 und der damit verbundenen Kabinenausstattungskomponenten sowie den Einfluss des Gewichts und der Anordnung des Kabinenausstattungskomponentenanschlusssystems 22 und der damit verbundenen Kabinenausstattungskomponenten auf den Schwerpunkt des Flugzeugs bereitstellt. In Figur 1 ist das weitere Steuersystem 44 als von dem Steuersystem 42 separates Steuersystem veranschaulicht. Die Steuersysteme 42, 44 können jedoch auch integriert miteinander ausgebildet und sowohl in Form von Hardware oder in Form von Software implementiert sein.

Die von dem Steuersystem 44 bereitgestellten Daten betreffend das Gewicht des Kabinenausstattungskomponentenanschlusssystems und der damit verbundenen Kabinenausstattungskomponenten und/oder den Einfluss des Gewichts und der Anordnung des Kabinenausstattungskomponentenanschlusssystems 22 und der damit verbundenen Kabinenausstattungskomponenten auf den Schwerpunkt des Flugzeugs können auf unterschiedliche Art und Weise verarbeitet werden. In einer ersten Variante nutzt das Steuersystem 42 die Daten zur Aktualisierung einer Datenbasis, die Parameterdaten betreffend das Gewicht des Kabinenausstattungskomponentenanschlusssystems 22 und der damit verbundenen Kabinenausstattungskomponenten und/oder den Einfluss des Gewichts und der Anordnung des Kabinenausstattungskomponentenanschlusssystems 22 und der damit verbundenen Kabinenausstattungskomponenten auf den Schwerpunkt der Flugzeugs enthält. Die Datenbasis enthält dann stets aktuelle, "reale" Daten, auf die auch andere Überwachungs- oder Steuersysteme des Flugzeugs, beispielsweise ein Flugsteuersystem zugreifen können.

Zusätzlich oder alternativ dazu kann das Steuersystem 44 des Kabinenausstattungskomponentenanschlusssystems 22 die Daten betreffend das Gewicht des Kabinenausstattungskomponentenanschlusssystems und der damit verbundenen Kabinenausstattungskomponenten auch zur Ermittlung eines Korrekturfaktors nutzen, der geeignet ist, eine Differenz zwischen einem realen Gewicht des Kabinenausstattungskomponentenanschlusssystems und der damit verbundenen Kabinenausstattungskomponenten und einem in einer Datenbasis gespeicherten Parameterwert für das Gewicht des Kabinenausstattungskomponentenanschlusssystems und der damit verbundenen Kabinenausstattungskomponenten zu kompensieren. In ähnlicher Weise kann das Steuersystem 44 die Daten betreffend den Einfluss des Gewichts und der Anordnung des Kabinenausstattungskomponentenanschlusssystems 22 und der damit verbundenen Kabinenausstattungskomponenten auf den Schwerpunkt des Flugzeugs zur Ermittlung eines Korrekturfaktors nutzen, der geeignet ist, eine Differenz zwischen einem realen Einfluss des Gewichts und der Anordnung des Kabinenausstattungskomponentenanschlusssystems 22 und der damit verbundenen Kabinenausstattungskomponenten auf den Schwerpunkt des Flugzeugs und einem in einer Datenbasis gespeicherten Parameterwert für den Einfluss des Gewichts und der Anordnung des Kabinenausstattungskomponentenanschlusssystems 22 und der damit verbundenen Kabinenausstattungskomponenten auf den Schwerpunkt des Flugzeugs zu kompensieren. Die korrigierten Parameterwerte können dann auch von anderen Überwachungs- oder Steuersystemen des Flugzeugs, beispielsweise einem Flugsteuersystem genutzt werden.

## Patentansprüche

1. Kabinenausstattungskomponentenanschlusssystem (22) für ein Flugzeug mit einer Mehrzahl von Anschlusselementen (32), die jeweils dazu eingerichtet sind, mit einer Kabinenausstattungskomponente verbunden zu werden, um die Kabinenausstattungskomponente an ein übergeordnetes System (24, 26, 28) des Flugzeugs anzuschließen,
wobei in zumindest einer Zone (Zone1, Zone2, Zone3) des Kabinenausstattungskomponentenanschlusssystems (22), die einem vorbestimmten Bereich einer Kabine (10) des Flugzeugs zugeordnet ist, eine Anzahl und eine Anordnung der Anschlusselemente (32) in der Kabine (10) des Flugzeugs so gewählt ist, dass bei einer Belegung der Kabine (10) des Flugzeugs mit einer vorbestimmten ersten Anzahl von Passagieren oder mit Reihen von Sitzen (18), die in einem vorbestimmten ersten Abstand voneinander angeordnet sind, in einer ersten Anzahl und/oder einen ersten Anordnung in der Kabine (10) des Flugzeugs vorgesehene Kabinenausstattungskomponenten mit den Anschlusselementen (32) des Kabinenausstattungskomponentenanschlusssystems (22) verbindbar sind, und dass bei einer Belegung der Kabine (10) des Flugzeugs mit einer vorbestimmten zweiten Anzahl von Passagieren oder mit Reihen von Sitzen (18), die in einem vorbestimmten zweiten Abstand voneinander angeordnet sind, in einer zweiten Anzahl und/oder einen
zweiten Anordnung in der Kabine (10) des Flugzeugs vorgesehene Kabinenausstattungskomponenten mit den Anschlusselementen (32) des Kabinenausstattungskomponentenanschlusssystems (22) verbindbar sind, ohne dass hierzu eine Modifikation der Anzahl und der Anordnung der Anschlusselemente (32) in der Kabine (10) des Flugzeugs erforderlich ist, **gekennzeichnet durch** ein Steuersystem des Kabinenausstattungskomponentenanschlusssystems (22), das dazu eingerichtet ist, für einen Konfigurationszustand des Kabinenausstattungskomponentenanschlusssystems charakteristische Daten über den Verbindungsstatus aller Anschlusselemente (32) des Kabinenausstattungskomponentenanschlusssystems (22) bereitzustellen, die in Abhängigkeit des Konfigurationszustands des Kabinenausstattungskomponentenanschlusssystems (22) anzeigen, ob ein Anschlusselement (32) des Kabinenausstattungskomponentenanschlusssystems (22) mit einer Kabinenausstattungskomponente verbunden ist oder nicht.

2. Kabinenausstattungskomponentenanschlusssystem nach Anspruch 1,
**dadurch gekennzeichnet, dass** in zumindest einer Zone (Zone 1, Zone 2, Zone 3) des Kabinenausstattungskomponentenanschlusssystems (22), die einem vorbestimmten Bereich einer Kabine (10) des Flugzeugs zugeordnet ist, eine Anzahl und eine Anordnung der Anschlusselemente (32) in der Kabine (10) des Flugzeugs so gewählt ist, dass bei einer Belegung der Kabine (10) des Flugzeugs mit einer vorbestimmten maximalen Anzahl von Passagieren oder mit Reihen von Sitzen (18), die in einem vorbestimmten minimalen Abstand voneinander angeordnet sind, in einer entsprechenden Anzahl und/oder einen entsprechenden Anordnung in der Kabine (10) des Flugzeugs vorgesehene Kabinenausstattungskomponenten mit den Anschlusselementen (32) des Kabinenausstattungskomponentenanschlusssystems (22) verbindbar sind, ohne dass hierzu eine Modifikation der Anzahl und der Anordnung der Anschlusselemente (32) in der Kabine (10) des Flugzeugs erforderlich ist.

3. Kabinenausstattungskomponentenanschlusssystem nach Anspruch 1 oder 2, **dadurch gekennzeichnet, dass** in zumindest einer Zone (Zone 1, Zone 2, Zone 3) des Kabinenausstattungskomponentenanschlusssystems (22), die einem vorbestimmten Bereich einer Kabine (10) des Flugzeugs zugeordnet ist, eine Anzahl und eine Anordnung der Anschlusselemente (32) in der Kabine (10) des Flugzeugs so gewählt ist, dass bei einer Belegung der Kabine (10) des Flugzeugs mit jeder vorbestimmten Anzahl von Passagieren oder mit Reihen von Sitzen (18), die in jedem vorbestimmten Abstand voneinander angeordnet sind, in einer entsprechenden Anzahl und/oder einen entsprechenden Anordnung in der Kabine (10) des Flugzeugs vorgesehene Kabinenausstattungskomponenten mit den Anschlusselementen (32) des Kabinenausstattungskomponentenanschlusssystems (22) verbindbar sind, ohne dass hierzu eine Modifikation der Anzahl und der Anordnung der Anschlusselemente (32) in der Kabine (10) des Flugzeugs erforderlich ist.

4. Kabinenausstattungskomponentenanschlusssystem nach einem der Ansprüche 1 bis 3,
**gekennzeichnet durch** ein Steuersystem (44), das dazu eingerichtet ist, Daten betreffend das Gewicht des Kabinenausstattungskomponentenanschlusssystems (22) und der damit verbundenen Kabinenausstattungskomponenten und/oder den Einfluss des Gewichts und der Anordnung des Kabinenausstattungskomponentenanschlusssystems (22) und der damit verbundenen Kabinenausstattungskomponenten auf den Schwerpunkt des Flugzeugs bereitzustellen.

5. Kabinenausstattungskomponentenanschlusssystem nach Anspruch 4,
**dadurch gekennzeichnet, dass** das Steuersystem (44) dazu eingerichtet ist, die Daten betreffend das Gewicht des Kabinenausstattungskomponentenanschlusssystems (22) und der damit verbundenen Kabinenausstattungskomponenten und/oder den Einfluss des Gewichts und der Anordnung des Kabinenausstattungskomponentenanschlusssystems (22) und der damit verbundenen Kabinenausstattungskomponenten auf den Schwerpunkt des Flugzeugs zur Aktualisierung einer Datenbasis zu nutzen, die Parameterdaten betreffend das Gewicht des Kabinenausstattungskomponentenanschlusssystems (22) und der damit verbundenen Kabinenausstattungskomponenten und/oder den Einfluss des Gewichts des Kabinenausstattungskomponentenanschlusssystems (22) und der damit verbundenen Kabinenausstattungskomponenten auf den Schwerpunkt des Flugzeugs enthält.

6. Kabinenausstattungskomponentenanschlusssystem nach Anspruch 4 oder 5, **dadurch gekennzeichnet, dass** das Steuersystem (44) dazu eingerichtet ist, die Daten betreffend das Gewicht des Kabinenausstattungskomponentenanschlusssystems (22) und der damit verbundenen Kabinenausstattungskomponenten zur Ermittelung eines Korrekturfaktors zu nutzen, der geeignet ist, eine Differenz zwischen einem realen Gewicht des Kabinenausstattungskomponentenanschlusssystems (22) und der damit verbundenen Kabinenausstattungskomponenten und einem in einer Datenbasis gespeicherten Parameterwert für das Gewicht des Kabinenausstattungskomponentenanschlusssystems (22) und der damit verbundenen Kabinenausstattungskomponenten zu kompensieren und/oder dass das Steuersystem (44) dazu eingerichtet ist, die Daten betreffend den Einfluss des Gewichts und der Anordnung des Kabinenausstattungskomponentenanschlusssystems (22) und der damit verbundenen Kabinenausstattungskomponenten auf den Schwerpunkt des Flugzeugs zur Ermittelung eines Korrekturfaktors zu nutzen, der geeignet ist, eine Differenz zwischen einem realen Einfluss des Gewichts und der Anordnung des Kabinenausstattungskomponentenanschlusssystems (22) und der damit verbundenen Kabinenausstattungskomponenten auf den Schwerpunkt des Flugzeugs und einem in einer Datenbasis gespeicherten Parameterwert für den Einfluss des Gewichts und der Anordnung des Kabinenausstattungskomponentenanschlusssystems (22) und der damit verbundenen Kabinenausstattungskomponenten auf den Schwerpunkt des Flugzeugs zu kompensieren.

7. Verfahren zur Modifikation einer Passagierkabinenkonfiguration in einem Flugzeug mit den Schritten:
- Bereitstellen eines Kabinenausstattungskomponentenanschlusssystem (22) für ein Flugzeug nach einem der Ansprüche 1 bis 6,
- Lösen mindestens einer Kabinenausstattungskomponente von einem Anschlusselement (32) des Kabinenausstattungskomponentenanschlusssystems (22), und/oder
- Verbinden von mindestens einer Kabinenausstattungskomponente mit einem Anschlusselement (32) des Kabinenausstattungskomponentenanschlusssystems (22), **dadurch gekennzeichnet, dass**
ein Steuersystem (42) für einen Konfigurationszustand des Kabinenausstattungskomponentenanschlusssystems (22) charakteristische Daten über den Verbindungsstatus aller Anschlusselemente (32) des Kabinenausstattungskomponentenanschlusssystems (22) bereitstellt, die in Abhängigkeit des Konfigurationszustands des Kabinenausstattungskomponentenanschlusssystems (22) anzeigen, ob ein Anschlusselement (32) des Kabinenausstattungskomponentenanschlusssystems (22) mit einer Kabinenausstattungskomponente verbunden ist oder nicht.

8. Verfahren nach Anspruch 7,
**dadurch gekennzeichnet, dass** ein Steuersystem (44) Daten bereitstellt, die für das Gewicht des Kabinenausstattungskomponentenanschlusssystems (22) und der damit verbundenen Kabinenausstattungskomponenten und/oder den Einfluss des Gewichts und der Anordnung des Kabinenausstattungskomponentenanschlusssystems (22) und der damit verbundenen Kabinenausstattungskomponenten auf den Schwerpunkt des Flugzeugs charakteristisch sind.

9. Verfahren nach Anspruch 8,
**dadurch gekennzeichnet, dass** das Steuersystem (44) die Daten betreffend das Gewicht des Kabinenausstattungskomponentenanschlusssystems (22) und der damit verbundenen Kabinenausstattungskomponenten und/oder den Einfluss des Gewichts und der Anordnung des Kabinenausstattungskomponentenanschlusssystems (22) und der damit verbundenen Kabinenausstattungskomponenten auf den Schwerpunkt des Flugzeugs zur Aktualisierung einer Datenbasis nutzt, die Parameterdaten betreffend das Gewicht des Kabinenausstattungskomponentenanschlusssystems (22) und der damit verbundenen Kabinenausstattungskomponenten und/oder den Einfluss und der Anordnung des Gewichts des Kabinenausstattungskomponentenanschlusssystems (22) und der damit verbundenen Kabinenausstattungskomponenten auf den Schwerpunkt des Flugzeugs enthält.

10. Verfahren nach Anspruch 8 oder 9,
**dadurch gekennzeichnet, dass** das Steuersystem (44) die Daten betreffend das Gewicht des Kabinenausstattungskomponentenanschlusssystems (22) und der damit verbundenen Kabinenausstattungskomponenten zur Ermittelung eines Korrekturfaktors nutzt, der geeignet ist, eine Differenz zwischen einem realen Gewicht des Kabinenausstattungskomponentenanschlusssystems (22) und der damit verbundenen Kabinenausstattungskomponenten und einem in einer Datenbasis gespeicherten Parameterwert für das Gewicht des Kabinenausstattungskomponentenanschlusssystems (22) und der damit verbundenen Kabinenausstattungskomponenten zu kompensieren und/oder dass das Steuersystem (44) die Daten betreffend den Einfluss des Gewichts und der Anordnung des Kabinenausstattungskomponentenanschlusssystems (22) und der damit verbundenen Kabinenausstattungskomponenten auf den Schwerpunkt des Flugzeugs zur Ermittelung eines Korrekturfaktors nutzt, der geeignet ist, eine Differenz zwischen einem realen Einfluss des Gewichts des Kabinenausstattungskomponentenanschlusssystems (22) und der damit verbundenen Kabinenausstattungskomponenten auf den Schwerpunkt des Flugzeugs und einem in einer Datenbasis gespeicherten Parameterwert für den Einfluss des Gewichts und der Anordnung des Kabinenausstattungskomponentenanschlusssystems (22) und der damit verbundenen Kabinenausstattungskomponenten auf den Schwerpunkt des Flugzeugs zu kompensieren.

## Claims

1. Cabin equipment component connection system (22) for an aircraft comprising a plurality of connecting elements (32), which are adapted to be connected to a cabin equipment component in order to connect the cabin equipment component to a higher-level system (24, 26, 28) of the aircraft,
wherein in at least one zone (zone 1, zone 2, zone 3) of the cabin equipment component connection system (22) that is assigned to a predetermined region of a cabin (10) of the aircraft, a number and an arrangement of the connecting elements (32) in the cabin (10) of the aircraft are selected such that, given a configuration of the cabin (10) of the aircraft with a predetermined first number of passengers or with rows of seats (18) that are arranged at a predetermined first distance from one another, cabin equipment components that are provided in a first number and/or a first arrangement in the cabin (10) of the aircraft are connectable to the connecting elements (32) of the cabin equipment component connection system (22), and that, given a configuration of the cabin (10) of the aircraft with a predetermined second number of passengers or with rows of seats (18) that are arranged at a predetermined second distance from one another, cabin equipment components that are provided in a second number and/or a second arrangement in the cabin (10) of the aircraft are connectable to the connecting elements (32) of the cabin equipment component connection system (22), without a modification of the number and the arrangement of the connecting elements (32) in the cabin (10) of the aircraft being required for this purpose,
**characterized by** a control system (42), which is adapted to provide data that are characteristic of a configuration state of the cabin equipment component connection system (22) regarding the connection state of all connecting elements (32) of the cabin equipment component connection system (22) which in dependence upon the configuration state of the cabin equipment component connection system (22) indicate whether a connecting element (32) of the cabin equipment component connection system (22) is connected to a cabin equipment component or not.

2. Cabin equipment component connection system according to claim 1, **characterized in that** in at least one zone (zone 1, zone 2, zone 3) of the cabin equipment component connection system (22) that is assigned to a predetermined region of a cabin (10) of the aircraft a number and an arrangement of the connecting elements (32) in the cabin (10) of the aircraft are selected such that, given a configuration of the cabin (10) of the aircraft with a predetermined maximum number of passengers or with rows of seats (18) that are arranged at a predetermined minimum distance from one another, cabin equipment components that are provided in a corresponding number and/or a corresponding arrangement in the cabin (10) of the aircraft are connectable to the connecting elements (32) of the cabin equipment component connection system (), without a modification of the number and the arrangement of the connecting elements (32) in the cabin (10) of the aircraft being required for this purpose.

3. Cabin equipment component connection system according to claim 1 or 2, **characterized in that** in at least one zone (zone 1, zone 2, zone 3) of the cabin equipment component connection system (22) that is assigned to a predetermined region of a cabin (10) of the aircraft, a number and an arrangement of the connecting elements (32) in the cabin (10) of the aircraft are selected such that, given a configuration of the cabin (10) of the aircraft with any predetermined number of passengers or with rows of seats (18) that are arranged at any predetermined distance from one another, cabin equipment components that are provided in a corresponding number and/or a corresponding arrangement in the cabin (10) of the aircraft are connectable to the connecting elements (32) of the cabin equipment component connection system (22), without a modification of the number and the arrangement of the connecting elements (32) in the cabin (10) of the aircraft being required for this purpose.

4. Cabin equipment component connection system according to one of claims 1 to 3,
**characterized by** a control system (44), which is adapted to provide data regarding the weight of the cabin equipment component connection system (22) and of the cabin equipment components connected thereto and/or regarding the influence of the weight and the arrangement of the cabin equipment component connection system (22) and of the cabin equipment components connected thereto upon the centre of gravity of the aircraft.

5. Cabin equipment component connection system according to claim 4, **characterized in that** the control system (44) is adapted to use the data regarding the weight of the cabin equipment component connection system (22) and of the cabin equipment components connected thereto and/or regarding the influence of the weight and the arrangement of the cabin equipment component connection system (22) and of the cabin equipment components connected thereto upon the centre of gravity of the aircraft to update a database, which contains parameter data regarding the weight of the cabin equipment component connection system (22) and of the cabin equipment components connected thereto and/or regarding the influence of the weight and the arrangement of the cabin equipment component connection system (22) and of the cabin equipment components connected thereto upon the centre of gravity of the aircraft.

6. Cabin equipment component connection system according to claim 4 or 5, **characterized in that** the control system (44) is adapted to use the data regarding the weight of the cabin equipment component connection system (22) and of the cabin equipment components connected thereto to determine a correction factor, which is capable of compensating a difference between a real weight of the cabin equipment component connection system (22) and of the cabin equipment components connected thereto and a parameter value for the weight of the cabin equipment component connection system (22) and of the cabin equipment components connected thereto that is stored in a database, and/or that the control system (44) is adapted to use the data regarding the influence of the weight and the arrangement of the cabin equipment component connection system (22) and of the cabin equipment components connected thereto upon the centre of gravity of the aircraft to determine a correction factor, which is capable of compensating a difference between a real influence of the weight and the arrangement of the cabin equipment component connection system (22) and of the cabin equipment components connected thereto upon the centre of gravity of the aircraft and a parameter value for the influence of the weight and the arrangement of the cabin equipment component connection system (22) and of the cabin equipment components connected thereto upon the centre of gravity of the aircraft that is stored in a database.

7. Method of modifying a passenger cabin configuration in an aircraft comprising the steps:
- providing a cabin equipment component connection system (22) for an aircraft according to one of claims 1 to 6,
- disconnecting at least one cabin equipment component from a connecting element (32) of the cabin equipment component connection system (22), and/or
- connecting at least one cabin equipment component to a connecting element (32) of the cabin equipment component connection system (22),
**characterized in that** a control system (42) provides data that are characteristic of a configuration state of the cabin equipment component connection system (22) regarding the connection state of all connecting elements (32) of the cabin equipment component connection system (22), which in dependence upon the configuration state of the cabin equipment component connection system (22) indicate whether a connecting element (32) of the cabin equipment component connection system (22) is connected to a cabin equipment component or not.

8. Method according to claim 7,
**characterized in that** a control system (44) provides data that are characteristic of the weight of the cabin equipment component connection system (22) and of the cabin equipment components connected thereto and/or the influence of the weight and the arrangement of the cabin equipment component connection system (22) and of the cabin equipment components connected thereto upon the centre of gravity of the aircraft.

9. Method according to claim 8,
**characterized in that** the control system (44) uses the data regarding the weight of the cabin equipment component connection system (22) and of the cabin equipment components connected thereto and/or regarding the influence of the weight and the arrangement of the cabin equipment component connection system (22) and of the cabin equipment components connected thereto upon the centre of gravity of the aircraft to update a database, which contains parameter data regarding the weight of the cabin equipment component connection system (22) and of the cabin equipment components connected thereto and/or regarding the influence and of the arrangement of the weight of the cabin equipment component connection system (22) and of the cabin equipment components connected thereto upon the centre of gravity of the aircraft.

10. Method according to claim 8 or 9,
**characterized in that** the control system (44) uses the data regarding the weight of the cabin equipment component connection system (22) and of the cabin equipment components connected thereto to determine a correction factor, which is capable of compensating a difference between a real weight of the cabin equipment component connection system (22) and of the cabin equipment components connected thereto and a parameter value for the weight of the cabin equipment component connection system (22) and of the cabin equipment components connected thereto that is stored in a database, and/or that the control system (44) uses the data regarding the influence of the weight and the arrangement of the cabin equipment component connection system (22) and of the cabin equipment components connected thereto upon the centre of gravity of the aircraft to determine a correction factor, which is capable of compensating a difference between a real influence of the cabin equipment component connection system (22) and of the cabin equipment components connected thereto upon the centre of gravity of the aircraft and a parameter value for the influence of the weight and the arrangement of the cabin equipment component connection system (22) and of the cabin equipment components connected thereto upon the centre of gravity of the aircraft that is stored in a database.

## Revendications

1. Système de raccordement de composants d'équipement de cabine (22) pour un aéronef, comprenant une pluralité d'éléments de raccordement (32) qui sont chacun agencés pour être connectés à un composant d'équipement de cabine pour raccorder le composant d'équipement de cabine à un système supérieur (24, 26, 28) de l'aéronef,
dans lequel système, dans au moins une zone (Zone 1, Zone 2, Zone 3) du système de raccordement de composants d'équipement de cabine (22) qui est associée à une zone prédéterminée d'une cabine (10) de l'aéronef, un nombre et une disposition des éléments de raccordement (32) dans la cabine (10) de l'aéronef sont choisis de façon qu'en cas d'occupation de la cabine (10) de l'aéronef par un premier nombre prédéterminé de passagers ou par des rangées de sièges (18) qui sont disposées à une première distance prédéterminée les unes des autres, des composants d'équipement de cabine prévus dans un premier nombre et/ou une première disposition dans la cabine (10) de l'aéronef puissent être connectés aux éléments de raccordement (32) du système de raccordement de composants d'équipement de cabine (22), et qu'en cas d'occupation de la cabine (10) de l'aéronef par un deuxième nombre prédéterminé de passagers ou par des rangées de sièges (18) qui sont disposées à une deuxième distance prédéterminée les unes des autres, des composants d'équipement de cabine prévus dans un deuxième nombre et/ou une deuxième disposition dans la cabine (10) de l'aéronef puissent être connectés aux éléments de raccordement (32) du système de raccordement de composants d'équipement de cabine (22) sans qu'une modification du nombre et de la disposition des éléments de raccordement (32) dans la cabine (10) de l'aéronef soit nécessaire pour cela,
**caractérisé par** un système de commande (42) qui, pour un état de configuration du système de raccordement de composants d'équipement de cabine (22), est agencé pour fournir des données caractéristiques sur l'état de connexion de tous les éléments de raccordement (32) du système de raccordement de composants d'équipement de cabine (22) qui indiquent, en fonction de l'état de configuration du système de raccordement de composants d'équipement de cabine (22), si un élément de raccordement (32) du système de raccordement de composants d'équipement de cabine (22) est connecté ou non à un composant d'équipement de cabine.

2. Système de raccordement de composants d'équipement de cabine selon la revendication 1, **caractérisé en ce que** dans au moins une zone (Zone 1, Zone 2, Zone 3) du système de raccordement de composants d'équipement de cabine (22) qui est associée à une zone prédéterminée d'une cabine (10) de l'aéronef, un nombre et une disposition des éléments de raccordement (32) dans la cabine (10) de l'aéronef sont choisis de façon qu'en cas d'occupation de la cabine (10) de l'aéronef par un nombre maximal prédéterminé de passagers ou par des rangées de sièges (18) qui sont disposées à une distance minimale prédéterminée les unes des autres, des composants d'équipement de cabine prévus dans un nombre correspondant et/ou une disposition correspondante dans la cabine (10) de l'aéronef puissent être connectés aux éléments de raccordement (32) du système de raccordement de composants d'équipement de cabine (22) sans qu'une modification du nombre et de la disposition des éléments de raccordement (32) dans la cabine (10) de l'aéronef soit nécessaire pour cela.

3. Système de raccordement de composants d'équipement de cabine selon la revendication 1 ou 2, **caractérisé en ce que** dans au moins une zone (Zone 1, Zone 2, Zone 3) du système de raccordement de composants d'équipement de cabine (22) qui est associée à une zone prédéterminée d'une cabine (10) de l'aéronef, un nombre et une disposition des éléments de raccordement (32) dans la cabine (10) de l'aéronef sont choisis de façon qu'en cas d'occupation de la cabine (10) de l'aéronef par tout nombre prédéterminé de passagers ou par des rangées de sièges (18) qui sont disposées à toute distance prédéterminée les unes des autres, des composants d'équipement de cabine prévus dans un nombre correspondant et/ou une disposition correspondante dans la cabine (10) de l'aéronef puissent être connectés aux éléments de raccordement (32) du système de raccordement de composants d'équipement de cabine (22) sans qu'une modification du nombre et de la disposition des éléments de raccordement (32) dans la cabine (10) de l'aéronef soit nécessaire pour cela.

4. Système de raccordement de composants d'équipement de cabine selon l'une des revendications 1 à 3,
**caractérisé par** un système de commande (44) qui est agencé pour fournir des données concernant le poids du système de raccordement de composants d'équipement de cabine (22) et des composants d'équipement de cabine connectés à celui-ci et/ou l'influence du poids et de la disposition du système de raccordement de composants d'équipement de cabine (22) et des composants d'équipement de cabine connectés à celui-ci sur le centre de gravité de l'aéronef.

5. Système de raccordement de composants d'équipement de cabine selon la revendication 4, **caractérisé en ce que** le système de commande (44) est agencé pour utiliser les données concernant le poids du système de raccordement de composants d'équipement de cabine (22) et des composants d'équipement de cabine connectés à celui-ci et/ou l'influence du poids et de la disposition du système de raccordement de composants d'équipement de cabine (22) et des composants d'équipement de cabine connectés à celui-ci sur le centre de gravité de l'aéronef afin de mettre à jour une base de données qui contient des données de paramètres concernant le poids du système de raccordement de composants d'équipement de cabine (22) et des composants d'équipement de cabine connectés à celui-ci et/ou l'influence du poids du système de raccordement de composants d'équipement de cabine (22) et des composants d'équipement de cabine connectés à celui-ci sur le centre de gravité de l'aéronef.

6. Système de raccordement de composants d'équipement de cabine selon la revendication 4 ou 5, **caractérisé en ce que** le système de commande (44) est agencé pour utiliser les données concernant le poids du système de raccordement de composants d'équipement de cabine (22) et des composants d'équipement de cabine connectés à celui-ci afin de déterminer un facteur de correction qui permet de compenser une différence entre un poids réel du système de raccordement de composants d'équipement de cabine (22) et des composants d'équipement de cabine connectés à celui-ci et une valeur de paramètre stockée dans une base de données pour le poids du système de raccordement de composants d'équipement de cabine (22) et des composants d'équipement de cabine connectés à celui-ci, et/ou **en ce que** le système de commande (44) est agencé pour utiliser les données concernant l'influence du poids et de la disposition du système de raccordement de composants d'équipement de cabine (22) et des composants d'équipement de cabine connectés à celui-ci sur le centre de gravité de l'aéronef afin de déterminer un facteur de correction qui permet de compenser une différence entre une influence réelle du poids et de la disposition du système de raccordement de composants d'équipement de cabine (22) et des composants d'équipement de cabine connectés à celui-ci sur le centre de gravité de l'aéronef et une valeur de paramètre stockée dans une base de données pour l'influence du poids et de la disposition du système de raccordement de composants d'équipement de cabine (22) et des composants d'équipement de cabine connectés à celui-ci sur le centre de gravité de l'aéronef.

7. Procédé de modification d'une configuration de cabine de passagers dans un aéronef, comprenant les étapes consistant à :
- fournir un système de raccordement de composants d'équipement de cabine (22) pour un aéronef selon l'une des revendications 1 à 6,
- déconnecter au moins un composant d'équipement de cabine d'un élément de raccordement (32) du système de raccordement de composants d'équipement de cabine (22), et/ou
- connecter au moins un composant d'équipement de cabine à un élément de raccordement (32) du système de raccordement de composants d'équipement de cabine (22),
**caractérisé en ce que**
un système de commande (42) fournit des données caractéristiques d'un état de configuration du système de raccordement de composants d'équipement de cabine (22) sur l'état de connexion de tous les éléments de raccordement (32) du système de raccordement de composants d'équipement de cabine (22) qui indiquent, en fonction de l'état de configuration du système de raccordement de composants d'équipement de cabine (22), si un élément de raccordement (32) du système de raccordement de composants d'équipement de cabine (22) est connecté ou non à un composant d'équipement de cabine.

8. Procédé selon la revendication 7,
**caractérisé en ce qu'**un système de commande (44) fournit des données qui sont caractéristiques du poids du système de raccordement de composants d'équipement de cabine (22) et des composants d'équipement de cabine connectés à celui-ci et/ou de l'influence du poids et de la disposition du système de raccordement de composants d'équipement de cabine (22) et des composants d'équipement de cabine connectés à celui-ci sur le centre de gravité de l'aéronef.

9. Procédé selon la revendication 8,
**caractérisé en ce que** le système de commande (44) utilise les données concernant le poids du système de raccordement de composants d'équipement de cabine (22) et des composants d'équipement de cabine connectés à celui-ci et/ou l'influence du poids et de la disposition du système de raccordement de composants d'équipement de cabine (22) et des composants d'équipement de cabine connectés à celui-ci sur le centre de gravité de l'aéronef afin de mettre à jour une base de données qui contient des données de paramètres concernant le poids du système de raccordement de composants d'équipement de cabine (22) et des composants d'équipement de cabine connectés à celui-ci et/ou l'influence et de la disposition du poids du système de raccordement de composants d'équipement de cabine (22) et des composants d'équipement de cabine connectés à celui-ci sur le centre de gravité de l'aéronef.

10. Procédé selon la revendication 8 ou 9,
**caractérisé en ce que** le système de commande (44) utilise les données concernant le poids du système de raccordement de composants d'équipement de cabine (22) et des composants d'équipement de cabine connectés à celui-ci afin de déterminer un facteur de correction qui permet de compenser une différence entre un poids réel du système de raccordement de composants d'équipement de cabine (22) et des composants d'équipement de cabine connectés à celui-ci et une valeur de paramètre stockée dans une base de données pour le poids du système de raccordement de composants d'équipement de cabine (22) et des composants d'équipement de cabine connectés à celui-ci, et/ou **en ce que** le système de commande (44) utilise les données concernant l'influence du poids et de la disposition du système de raccordement de composants d'équipement de cabine (22) et des composants d'équipement de cabine connectés à celui-ci sur le centre de gravité de l'aéronef afin de déterminer un facteur de correction qui permet de compenser une différence entre une influence réelle du poids du système de raccordement de composants d'équipement de cabine (22) et des composants d'équipement de cabine connectés à celui-ci sur le centre de gravité de l'aéronef et une valeur de paramètre stockée dans une base de données pour l'influence du poids et de la disposition du système de raccordement de composants d'équipement de cabine (22) et des composants d'équipement de cabine connectés à celui-ci sur le centre de gravité de l'aéronef.
